# EUROPÄISCHE PATENTSCHRIFT

(11) **EP 0 482 358 B1**
(45) Veröffentlichungstag und Bekanntmachung des Hinweises auf die Patenterteilung: **15.06.1994**
(21) Anmeldenummer: 91116023.2
(22) Anmeldetag: 20.09.1991
(51) Int. Cl.: G01D 15/22, G01D 9/16

(54) **Elektrischer Schreiber**
Electrical recorder
Enregistreur électrique

(30) Priorität: 26.10.1990 DE 4034065
(43) Veröffentlichungstag der Anmeldung: 29.04.1992
(73) Patentinhaber: Hartmann & Braun Aktiengesellschaft, 60484 Frankfurt am Main (DE)
(72) Erfinder: Herrlein, Erwin, W-6000 Frankfurt 71 (DE); Meffert, Rolf, W-6082 Mörfelden (DE)
(74) Vertreter: Meissner, Peter E., Dipl.-Ing.

(56) Entgegenhaltungen:
- DE-A- 2 330 012
- DE-A- 3 339 134
- DE-C- 289 829
- DE-C- 348 234
- DE-C- 403 403
- FR-A- 1 174 915

## Beschreibung

Die Erfindung bezieht sich auf einen elektrischen Schreiber zur Wiedergabe vorgegebener Werte auf einer beweglichen Schreibunterlage gemäß dem Oberbegriff des Patentanspruchs 1.

Ein derartiger elektrischer Schreiber ist aus der DE-OS 33 39 134 bekannt. Auf Führungsschienen, die quer zur Bewegungsrichtung des als Schreibunterlage dienenden Registrierpapiers verlaufen, gleitet ein Schlitten, in dem ein auswechselbarer selbstschreibender Schreibeinsatz schwenkbar gelagert ist. Der Schreibeinsatz besitzt eine starr mit ihm verbundene farbabgebende Schreibspitze, die auf dem Registrierpapier aufliegt. Schreibeinsatz und Schreibspitze sind um eine parallel zu den Führungsschienen verlaufende Achse schwenkbar. Die Längsrichtung des Schreibeinsatzes erstreckt sich senkrecht zu der Führungseinrichtung des Schlittens. Ein von einem ortsfesten Elektromagneten betätigter Druckerbügel, der sich über die ganze Breite des elektrischen Schreibers erstreckt, schwenkt den Schreibeinsatz bei Betätigung des Elektromagneten derart, daß die Schreibspitze nicht mehr auf dem Registrierpapier aufliegt. Der Schlitten kann jetzt bewegt werden, ohne daß die Schreibspitze das Registrierpapier berührt. Eine derartige Bewegung des Schlittens ist erforderlich, wenn der elektrische Schreiber nicht nur als Linienschreiber betrieben werden soll, sondern auch als Punktschreiber oder zur Wiedergabe alphanumerischer Zeichen für zusätzliche Textangaben. Bei dieser Lösung, bei der ein ortsfester Elektromagnet den Schreibeinsatz über ein einen Druckerbügel enthaltendes Hebelsystem betätigt, ist die große Geräuschentwicklung im Übertragungssystem nachteilig. Auf Grund der großen Massen des Übertragungssystems ergibt sich eine relativ niedrige Grenzfrequenz für die Betätigung des Druckerbügels. Für den Druck von Textangaben ist aber eine möglichst große Arbeitsfrequenz der Schwenkbewegung des Schreibeinsatzes erwünscht. Dazu kommt ein Verschleiß des Schreibeinsatzes an der Stelle, an der der Druckerbügel an dem Schreibeinsatz angreift, auf Grund der Relativbewegung zwischen dem Druckerbügel und dem Schreibeinsatz bei der Bewegung des Schlittens, wenn die Schreibspitze nicht auf dem Registrierpapier aufliegt. Der sich über die ganze Breite des elektrischen Schreibers erstreckende Druckerbügel benötigt viel Platz. Außerdem sind bei einer Ausführung des elektrischen Schreibers als mehrkanaliger Linienschreiber unterschiedlich ausgebildete Baugruppen erforderlich.

Der Erfindung liegt die Aufgabe zugrunde, einen elektrischen Schreiber der eingangs genannten Art zu schaffen, der eine möglichst große Arbeitsfrequenz der Schwenkbewegung des Schreibeinsatzes erlaubt.

Diese Aufgabe wird erfindungsgemäß bei einem elektrischen Schreiber der eingangs genannten Art durch die im Kennzeichen des Patentanspruchs 1 angegebenen Merkmale gelöst. Durch die Verringerung der bewegten Massen wird eine Verringerung der Geräuschentwicklung und eine wesentliche Erhöhung der Arbeitsfrequenz der Schwenkbewegung des Schreibeinsatzes erreicht. Durch den Fortfall des Druckerbügels und der damit verbundenen Relativbewegung zwischen Druckerbügel und Schreibeinsatz entfällt der durch die Relativbewegung verursachte Verschleiß des Schreibeinsatzes. Bei einer Ausgestaltung des erfindungsgemäßen Schreibers als mehrkanaliger Schreiber können gleich ausgebildete, jeweils aus Schlitten und Führungseinrichtung bestehende Baugruppen übereinander angeordnet werden. Der Höhenversatz der Baugruppen läßt sich dabei durch die Länge der Schreibspitzen der Schreibeinsätze ausgleichen. Damit ist es möglich, für die verschiedenen Kanäle unterschiedliche Farben zu verwenden, wobei für den Linienzug und die alphanumerischen Zeichen eines Kanals jeweils dieselbe Farbe verwendet wird.

Vorteilhafte Ausgestaltungen des elektrischen Schreibers nach Anspruch 1 sind in den Ansprüchen 2 bis 4 gekennzeichnet. Die schräge Anordnung der sich gegenüberliegenden Polflächen von Joch und Anker des Elektromagneten führt zu einem kleinen Luftspalt zwischen Joch und Anker und damit zu einer niedrigen Erwärmung des Elektromagneten. Trotzdem steht ein ausreichend großer Arbeitshub für die Schreibspitze zur Verfügung, der insbesondere bei der Verwendung von Faltpapier als Schreibunterlage von Bedeutung ist, da das Faltpapier im Bereich der Faltkante nicht immer ganz auf der Transportwalze aufliegt. Die Führung des Ankers durch seitliche Zapfen gewährleistet eine definierte Bewegung des Ankers. Die Verteilung der Spulen auf beide Schenkel des U-förmigen Joches verringert den Raumbedarf des Schlittens.

Die Erfindung wird im folgenden mit ihren weiteren Einzelheiten anhand eines in den Zeichnungen dargestellten Ausführungsbeispiels näher erläutert. Es zeigen
- Figur 1: die Draufsicht auf einen Schlitten mit eingesetztem Schreibeinsatz gemäß der Erfindung,
- Figur 2: eine Seitenansicht des in der Figur 1 dargestellten Schlittens mit Schreibeinsatz und
- Figur 3: eine räumliche Darstellung der Feder, die mit dem Schlitten verbunden ist und an deren freien Ende der Anker des Elektromagneten befestigt ist.

Gleiche Bauteile sind mit den gleichen Bezugszeichen versehen.

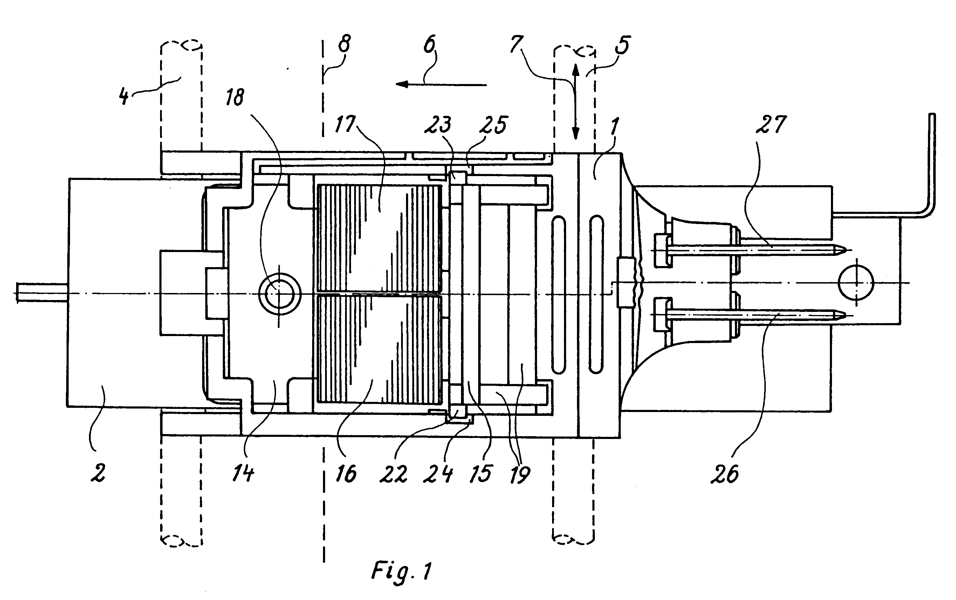

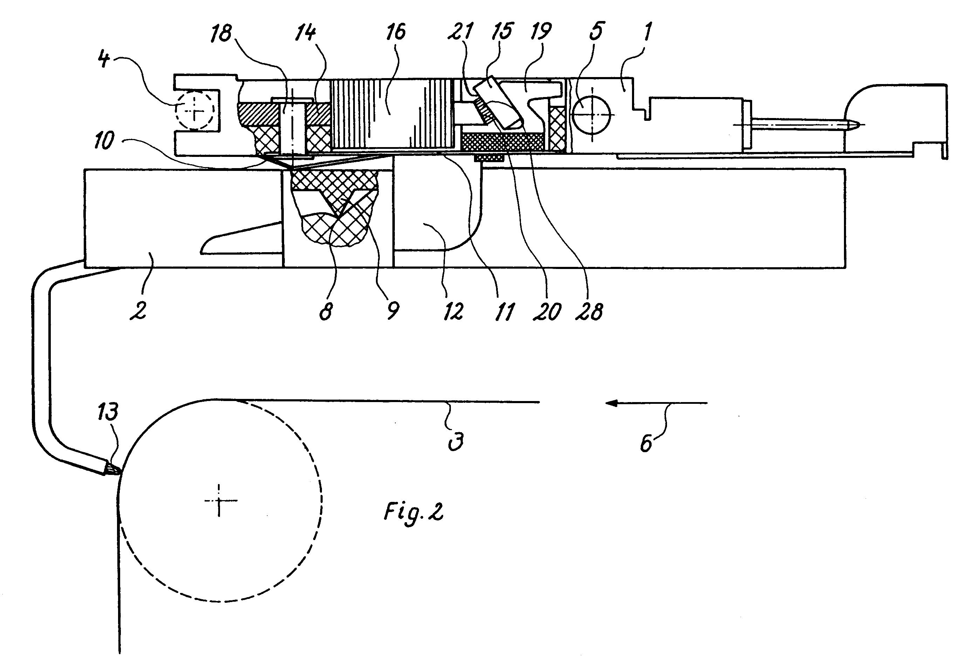

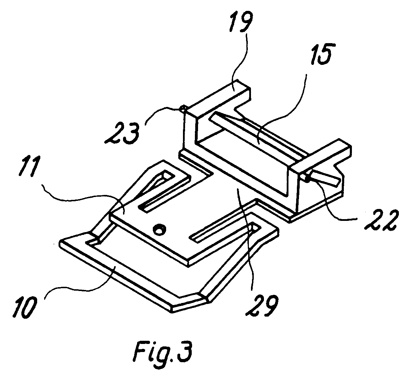

Die folgende Beschreibung des Ausführungsbeispiels bezieht sich auf die Figuren 1 bis 3. Die Figur 1 zeigt dabei die Draufsicht auf einen Schlitten 1 mit eingesetztem Schreibeinsatz 2. Die Figur 2 zeigt ergänzend eine Seitenansicht, bei der zur Verdeutlichung von Einzelheiten eine teilweise aufgebrochene Darstellung gewählt worden ist, und die Figur 3 zeigt in räumlicher Darstellung in den Figuren 1 und 2 nicht so gut erkennbare Einzelheiten. Der Schlitten 1 gleitet auf einer quer zur Bewegungsrichtung der Schreibunterlage 3 verlaufenden Führungseinrichtung. Die Führungseinrichtung besteht aus zwei in der Figur 1 gestrichelt dargestellten Stangen 4 und 5. Die Bewegungsrichtung der Schreibunterlage 3 ist durch einen Pfeil 6 angegeben und die Bewegungsrichtung des Schlittens 1 ist durch einen weiteren Pfeil 7 angegeben. Der Schreibeinsatz 2 ist in dem Schlitten 1 um eine parallel zu der Führungseinrichtung 4, 5 verlaufende Achse 8 schwenkbar gelagert. Die Achse 8 ist dabei aus den Auflagekanten von zwei Schneiden an beiden Seiten des Schreibeinsatzes 2 gebildet, von denen in der Figur 2 die Schneide 9 dargestellt ist. Die Achse 8 ist in der Figur 1 durch eine gestrichelte Linie dargestellt. Der eine Arm 10 einer Blattfeder 11 drückt die Schneiden in Aussparungen von zwei als Lagerstellen dienenden Flanschen, die die Seitenflächen des Schlittens 1 nach unten verlängern. Der in der Figur 2 sichtbare Flansch ist mit dem Bezugszeichen 12 versehen. Eine Schreibspitze 13 ist mit dem Schreibeinsatz 2 starr verbunden. Der Arm 10 der Blattfeder 11 übt auf den Schreibeinsatz 2 eine im Gegenuhrzeigersinn wirkende Kraft aus. Diese Kraft drückt die Schreibspitze 13 gegen den Aufzeichnungsträger 3.

Solange die Schreibspitze 13 auf dem Aufzeichnungsträger 3 aufliegt, erfolgt eine Aufzeichnung in der Form eines Linienzuges. Zur Wiedergabe alphanumerischer Zeichen, z. B. in Form einer 5x7-Matrix, bei der die Zeichen einer Textzeile durch die Punkte von sieben aufeinander folgenden Zeilen gebildet werden, ist es erforderlich, in kurzen Abständen nacheinander Punkte auf die Schreibunterlage zu drucken. Hierzu wird die Spitze 13 des Schreibeinsatzes 2 von dem Aufzeichnungsträger 3 abgehoben, der Schlitten 1 entsprechend dem wiederzugebenden Text ein Stück verschoben, die Spitze 13 des Schreibeinsatzes 2 kurzzeitig auf den Aufzeichnungsträger 3 abgesenkt, um einen Punkt abzudrucken, und danach der Schlitten 1 bei abgehobener Schreibspitze 13 weiter verschoben. Dieses Spiel wiederholt sich in schneller Folge, bis alle Punkte einer Zeile gedruckt sind. Nach dem Drucken der Punkte der ersten Zeile wird der Aufzeichnungsträger 3 um eine Punktbreite weiterbewegt, und die Punkte der zweiten Zeile der Zeichen des wiederzugebenden Textes werden in der gleichen Weise gedruckt. Dieser Vorgang wiederholt sich so lange, bis alle Zeilen der Zeichen der Textzeile gedruckt sind. Wegen der Vielzahl der dabei zu druckenden Punkte ist eine möglichst hohe Arbeitsfrequenz erforderlich.

Das Abheben der Schreibspitze 13 erfolgt durch eine Schwenkbewegung des mit der Schreibspitze 13 starr verbundenen Schreibeinsatzes 2 um die Achse 8 im Uhrzeigersinn. In dem Schlitten 1 ist ein Elektromagnet mit einem Joch 14 und mit einem Anker 15 oberhalb des Schreibeinsatzes 2 angeordnet. Das Joch 14 ist U-förmig ausgebildet. Beide Schenkel des Joches 14 sind gleich lang. Auf den beiden Schenkeln des Joches 14 sind Spulen 16 und 17 angeordnet. Das Joch 14 ist durch einen Niet 18 mit dem Schlitten 1 fest verbunden. Das eine Ende der Blattfeder 11 ist ebenfalls durch den Niet 18 fest mit dem Schlitten 1 verbunden. Das andere, freie Ende 29 der Blattfeder 11 ist über eine Halteeinrichtung 19 mit dem Anker 15 des Elektromagneten verbunden. Der Anker 15 ist quaderförmig ausgebildet. Seine Enden sind an den Seitenwänden der Halteeinrichtung 19 gehalten, während das parallel zu dem Anker 15 verlaufende Grundteil der Halteeinrichtung 19 mit dem freien Ende 29 der Blattfeder 11 verbunden ist. Ausgehend von dem freien Ende 29 der Blattfeder 11 erstreckt sich der Arm 10 der Blattfeder 11, der den Schreibeinsatz 2 gegen den Schlitten 1 und die Schreibspitze 13 des Schreibeinsatzes 2 gegen den Aufzeichnungsträger 3 drückt.

Die Figuren 1 und 2 zeigen den Anker 15 des Elektromagneten in seiner Ruhestellung, in der kein Strom durch die Spulen 16 und 17 fließt. Bei Betätigung des Elektromagneten, d. h. wenn durch die Spulen 16 und 17 Strom fließt, wird der Anker 15 durch die Magnetkraft gegen die Enden des Joches 14 gezogen. Die Bewegung des Ankers 15 überträgt sich dabei auf die Blattfeder 11, die ihrerseits den Schreibeinsatz 2 im Uhrzeigersinn um die Achse 8 derart schwenkt, daß die Schreibspitze 13 von dem Aufzeichnungsträger 3 abgehoben wird. Nach dem Ende der Betätigung des Elektromagneten, d. h. wenn kein Strom mehr durch die Spulen 16 und 17 fließt, stellt die Blattfeder 10 den Anker 15 wieder in die Ruhestellung zurück. Mit dem Anker 15 bewegt sich auch der Schreibeinsatz 2 zurück, bis die Schreibspitze 13 wieder auf dem Aufzeichnungsträger 3 aufliegt. Die bei der Schwenkbewegung bewegten Massen sind durch die erfindungsgemäße Ausbildung des Schreibers auf den Anker 15 des Elektromagneten, die Halteeinrichtung 19 für den Anker 15, die Blattfeder 11 und den Schreibeinsatz 2 mit der Schreibspitze 13 reduziert.

Die Polflächen 20 und 21 des Joches 14 bzw. des Ankers 15 sind schräg zu der Längsrichtung des Joches 14 angeordnet. Diese Maßnahme erlaubt es, den Luftspalt zwischen den Polflächen des Joches und des Ankers klein zu halten und trotzdem einen ausreichend großen Arbeitshub der Schreibspitze 13 zu erhalten.

Die Halteeinrichtung 19 des Ankers 15 ist mit seitlichen Zapfen 22 und 23 an den Außenseiten ihrer Seitenwände versehen. Diese Zapfen greifen in entsprechende Schlitze 24 bzw. 25 in den Innenseiten der Seitenwände des Schlittens 1 ein. Die Zapfen 22 und 23 bilden zusammen mit den zugehörigen Schlitzen 24 bzw. 25 eine Führung für den Anker 15 des Elektromagneten. Diese Führung verhindert, daß der Anker 15 bei bestromtem Elektromagnet 14 bis 17 den zwischen Joch 14 und Anker 15 bestehenden Kraftlinien 28 des Magnetfeldes folgt und dadurch nicht der gewünschte Arbeitshub an der Schreibspitze 13 des Schreibeinsatzes 2 erreicht wird.

Die elektrische Versorgung des Elektromagneten erfolgt über Steckkontakte 26 und 27, die mit den Anschlüssen der Spulen 16 und 17 verbunden sind. Die von den Steckkontakten 26 und 27 zu den Anschlüssen der Spulen 16 und 17 führenden Leitungen sind aus Gründen der Übersichtlichkeit in den Figuren 1 und 2 nicht dargestellt.

## Patentansprüche

1. Elektrischer Schreiber zur Wiedergabe vorgegebener Werte auf einer in einer Bewegungsrichtung beweglichen Schreibunterlage (3)
- mit einem auf einer quer zur Bewegungsrichtung der Schreibunterlage (3) verlaufenden Führungseinrichtung (4,5) gleitenden Schlitten (1),
- mit einem auswechselbaren, eine Längsrichtung aufweisenden und selbstschreibenden Schreibeinsatz (2), der in dem Schlitten (1) um eine parallel zu der Führungseinrichtung (4,5) verlaufende Achse (8) schwenkbar gelagert ist, wobei die Längsrichtung des Schreibeinsatzes sich senkrecht zu der Führungseinrichtung (4,5) des Schlittens (1) erstreckt,
- mit einer starr mit dem Schreibeinsatz (2) verbundenen farbabgebenden Schreibspitze (13), die im Verwendungsfall auf der beweglichen Schreibunterlage (3) aufliegt, und
- mit einer Einrichtung (10,11,14-19), die bei ihrer Betätigung den Schreibeinsatz (2) derart schwenkt, daß die Schreibspitze (13) nicht mehr auf der Schreibunterlage (3) aufliegt,
dadurch gekennzeichnet,
- daß in dem Schlitten (1) ein Elektromagnet (14 bis 17) oberhalb des Schreibeinsatzes (2) angeordnet ist, dessen Joch (14) U-förmig ausgebildet und mit dem Schlitten (1) fest verbunden ist und dessen Anker (15) über eine Halteeinrichtung (19) mit dem freien Ende (29) einer Blattfeder (11) verbunden ist, deren anderes Ende fest mit dem Schlitten (1) verbunden ist, und
- daß im Verwendungsfall der Anker (15) bei Betätigung des Elektromagneten (14 bis 17) den Schreibeinsatz (2) über die Blattfeder (11) um die parallel zu der Führungseinrichtung (4, 5) verlaufende Achse (8) schwenkt.

2. Elektrischer Schreiber nach Anspruch 1, dadurch gekennzeichnet, daß die sich gegenüberliegenden Polflächen (20, 21) von Joch (14) und Anker (15) des Elektromagneten (14 bis 17) bei gleicher Schenkellänge des U-förmigen Joches (14) schräg zu der Längsrichtung des Joches (14) angeordnet sind, wobei die Polflächen (20, 21) von Joch (14) und Anker (15) sich parallel gegenüberliegen.

3. Elektrischer Schreiber nach Anspruch 1 oder Anspruch 2, dadurch gekennzeichnet,
- daß die Halteeinrichtung (19) des Ankers (15) mit seitlichen Zapfen (22, 23) versehen ist und
- daß die Zapfen (22, 23) in entsprechende Schlitze (24, 25) in den Seitenwänden des Schlittens (1) derart eingreifen, daß der Anker (15) jeweils senkrecht zu der Längsrichtung des Joches (14) und zu der Bewegungsrichtung des Schlittens (1) geführt ist.

4. Elektrischer Schreiber nach einem der vorhergehenden Ansprüche, dadurch gekennzeichnet, daß sich auf jedem der beiden Schenkel des U-förmigen Joches (14) eine Spule (16, 17) befindet.

## Claims

1. An electrical plotter for the reproduction of predetermined values on a plotting substrate (3) movable in a direction of movement
- comprising a carriage (1) sliding on a guide apparatus (4, 5) running perpendicularly to the direction of movement of the plotting substrate (3),
- comprising a replaceable auto-plotting plotting insert (2) which comprises a longitudinal direction and is mounted swivellably in the carriage (1) about an axis (8) running in parallel with the guide apparatus (4, 5), the longitudinal direction of the plotting insert extending perpendicularly to the guide apparatus (4, 5) of the carriage (1),
- comprising an ink-delivering plotting stylus (13) connected with the plotting insert (2), which stylus (13) rests when in use on the movable plotting substrate (3), and
- comprising an apparatus (10, 11, 14-19), which swivels the plotting insert (2) in such a way upon actuation that the stylus (13) no longer rests on the plotting substrate (3),
characterized in that
- an electromagnet (14 to 17) is arranged in the carriage (1) above the plotting insert (2), the yoke (14) of which electromagnet is of U-shaped construction and is firmly connected with the carriage (1) and the armature (15) of which electromagnet is connected via a holding device (19) with the free end (29) of a leaf spring (11), the other end of which is firmly connected to the carriage (1), and
- in use the armature (15) swivels the plotting insert (2) via the leaf spring (11) about the axis (8) running in parallel with the guide apparatus (4, 5) upon actuation of the electromagnet (14 to 17).

2. An electrical plotter according to claim 1, characterized in that the opposing pole faces (20, 21) of yoke (14) and armature (15) of the electromagnet (14 to 17) are arranged, with equal leg length of the U-shaped yoke (14) at an angle to the longitudinal direction of the yoke (14), the pole faces (20, 21) of yoke (14) and armature (15) lying opposite each other in parallel.

3. An electrical plotter according to claim 1 or claim 2, characterized in that
- the holding device (19) of the armature (15) is provided with lateral pins (22, 23) and
- the pins (22, 23) engage in corresponding slits (24, 25) in the side walls of the carriage (1) in such a way that the armature (15) is guided perpendicularly to the longitudinal direction of the yoke (14) and to the direction of movement of the carriage (1).

4. An electrical plotter accordina to any one of the preceding claims, characterized in that a coil (16, 17) is located on each of the two legs of the U-shaped yoke (14).

## Revendications

1. Enregistreur électrique pour reproduire des valeurs prédéfinies sur un support d'enregistrement (3) mobile dans une direction de mouvement, comportant :
- un chariot (1) glissant sur un dispositif de guidage (4,5) s'étendant transversalement à la direction de mouvement du support d'enregistrement (3),
- une unité d'enregistrement (2) interchangeable, présentant une direction longitudinale, et à enregistrement automatique, qui est montée dans le chariot (1) de façon pivotante autour d'un axe (8) s'étendant parallèlement au dispositif de guidage (4,5), la direction longitudinale de l'unité d'enregistrement s'étendant perpendiculairement au dispositif de guidage (4,5) du chariot (1),
- une pointe d'enregistrement (13), délivrant de l'encre, reliée rigidement à l'unité d'enregistrement (2), qui repose, en service, sur le support d'enregistrement mobile (3), et
- un dispositif (10,11,14-19) qui, lors de son actionnement, pivote l'unité d'enregistrement (2), de sorte que la pointe d'enregistrement (13) ne repose plus sur le support d'enregistrement (3),
caractérisé en ce que :
- dans le chariot (1), il est agencé un électro-aimant (14 à 17) au-dessus de l'unité d'enregistrement (2), dont la culasse (14) est réalisée en forme de U et est solidaire du chariot (1) et dont l'armature (15) est reliée, par l'intermédiaire d'un dispositif de maintien (19), à l'extrémité libre (29) d'un ressort à lames (11), dont l'autre extrémité est solidaire du chariot (1), et
- en service, l'armature (15), lors de l'actionnement de l'électro-aimant (14 à 17), pivote l'unité d'enregistrement (2), par l'intermédiaire du ressort à lames (11), autour de l'axe (8) s'étendant parallèlement au dispositif de guidage (4,5).

2. Enregistreur électrique selon la revendication 1, caractérisé en ce que les surfaces polaires opposées (20,21) de la culasse (14) et de l'armature (15) de l'électro-aimant (14 à 17), pour une longueur des branches identique de la culasse en forme de U (14), sont agencées de façon inclinée par rapport à la direction longitudinale de la culasse (14), les surfaces polaires (20,21) de la culasse (14) et de l'armature (15) étant parallèlement opposées.

3. Enregistreur électrique selon la revendication 1 ou la revendication 2,
caractérisé en ce que :
- le dispositif de maintien (19) de l'armature (15) est muni de tourillons latéraux (22,23), et
- les tourillons (22,23) s'engagent, dans des fentes correspondantes (24,25), dans les parois latérales du chariot (1), de sorte que l'armature (15) est guidée, à chaque fois, perpendiculairement à la direction longitudinale de la culasse (14) et à la direction de mouvement du chariot (1).

4. Enregistreur électrique selon une des revendications précédentes,
caractérisé en ce qu'une bobine (16,17) se trouve sur chacune des deux branches de la culasse (14) en forme de U.
